## Europäisches Patentamt

## European Patent Office

## Office européen des brevets

(19)

(11) Veröffentlichungsnummer: **0 265 589**
**B1**

(12)

# EUROPÄISCHE PATENTSCHRIFT

(45) Veröffentlichungstag der Patentschrift:
**01.08.90**

(51) Int. Cl.⁵: **B21D 45/02**, B21D 28/02

(21) Anmeldenummer: **87107515.6**

(22) Anmeldetag: **23.05.87**

(54) Schneidpresse.

(30) Priorität: **31.10.86 DE 3637204**

(43) Veröffentlichungstag der Anmeldung:
**04.05.88 Patentblatt 88/18**

(45) Bekanntmachung des Hinweises auf die Patenterteilung:
**01.08.90 Patentblatt 90/31**

(84) Benannte Vertragsstaaten:
**CH DE FR GB LI**

(56) Entgegenhaltungen:
**EP-A- 0 074 041**
**DD-A- 134 198**
**DE-A- 2 913 439**

(73) Patentinhaber: **C. Behrens AG, Hackelmasch 1,
D-3220 Alfeld, Leine(DE)**

(72) Erfinder: **Otto, Gerhard, Anemonenweg 1,
D-3220 Alfeld(DE)**
Erfinder: **Rohrbach, Manfred, Willi-Plappert-Strasse 21,
D-3200 Hildesheim(DE)**
Erfinder: **Leupold, Gerald, Südhang 8, D-3220 Alfeld(DE)**

(74) Vertreter: **Sobisch, Peter, Dipl.-Ing. et al, Patentanwälte
Dipl.-Inge. Röse, Kosel & Sobisch Odastrasse 4a
Postfach 129, D-3353 Bad Gandersheim 1(DE)**

ACTORUM AG

## Beschreibung

Die Erfindung bezieht sich auf eine Schneidpresse entsprechend dem Oberbegriff des Anspruchs 1.

Sie kann grundsätzlich Anwendung finden bei automatisch arbeitenden Blechbearbeitungsmaschinen, insbesondere bei numerisch gesteuerten Revolverschneidpressen.

Es ist bei diesen Schneidpressen bekannt, die Werkstückzufuhr und den Abtransport der bearbeiteten Werkstücke automatisch durchzuführen, wobei der Abtransport beispielsweise über kippbare Maschinentischsegmente bzw. sich öffnende Maschinentischbereiche in Verbindung mit Förderbändern erfolgt. Insbesondere die Verwendung von Lasersystemen als Einrichtungen zur Durchführung sehr genauer Schneidvorgänge hat insoweit zu Problemen geführt, als aufgrund der engen Trennfuge zwischen den geschnittenen Blechteilen ein Herauslösen von auf diese Weise ausgeschnittenen Teilen den Einsatz besonderer Ausdrückeinrichtungen erforderlich macht.

Es ist bekannt, derartige Ausdrückeinrichtungen außerhalb des eigentlichen Arbeitsbereichs der Schneidpresse anzuordnen, nämlich außerhalb des Bereiches, in dem das Schneidwerkzeug wirksam ist. Hierbei muß das, das ausgeschnittene Blechteil enthaltene Werkstück beispielsweise mit den Mitteln eines Koordinatentisches aus dem Arbeitsraum der Schneidpresse heraus und in den Wirkungsbereich der Ausdrückeinrichtung hineinbewegt werden, welche stets mit einer Öffnung des Maschinentisches zusammenwirkt, über welche dann das herausgedrückte Teil abgeführt wird.

Aus der EP-A 0 074 041 ist eine Schneidpresse gemäß dem Oberbegriff des Patentanspruchs 1 zur Bearbeitung tafelartiger Werkstücke bekannt, die mit einer Laserschneideinrichtung ausgerüstet sein kann. Die ausgeschnittenen Teile werden unter Mitwirkung eines Koordinatentisches auf eine verschiebbare, jalousieartig ausgebildete Werkstückauflage überführt, die mit einer Öffnung zwecks Abführung der genannten Teile ausgerüstet ist. Oberhalb der Öffnung befindet sich eine Ausdrückerplatte, die an einer sich senkrecht zu ihrer Ebene erstreckenden, vertikal bewegbaren Stange befestigt ist, die mit einer Kolben-Zylinder-Einheit in Wirkverbindung steht. Durch Druckausübung mittels der genannten Ausdrückerplatte können die Teile aus der Ebene des tafelartigen Werkstücks herausgelöst und über die genannte Öffnung abgeführt werden.

Es hat sich bei diesen bekannten Schneidpressen jedoch als problematisch herausgestellt, kleine und verhältnismäßig dünne ausgeschnittene Teile sicher abzuführen, da bei der unvermeidbaren Transportbewegung des Werkstücks über den Maschinentisch diese Teile hängenbleiben oder auch durch Verkanten beschädigt werden.

Es ist die Aufgabe der Erfindung, eine mit einer Lasereinrichtung ausgerüstete Schneidpresse dahingehend auszugestalten, daß auch kleine und dünne herausgeschnittene Teile sicher und in einfacher Weise abführbar sind. Gelöst ist diese Aufgabe bei einer gattungsgemäßen Schneidpresse durch die Merkmale des Kennzeichnungsteils des Anspruchs 1. Wesentlich ist, daß zur Durchführung des Vorgangs des Herauslösens der ausgeschnittenen Teile aus dem Werkstück letzteres nicht aus dem Arbeitsbereich der Presse herausbewegt werden muß, so daß dieser Herauslösevorgang im Arbeitsbereich selbst stattfindet. In Abweichung von den bisher bekannten Schneidpressen kann somit die Ausdrückeinrichtung in den Arbeitsbereich der Schneidpresse hineinbewegt werden. Die Einrichtung besteht aus einer an sich bekannten Ausdrückerplatte, über welche ein mechanischer Druck auf das Werkstück ausübbar ist, als dessen Folge die ausgeschnittenen Teile nach unten aus dem Werkstück herausfallen können. Die Ausdrückerplatte wirkt hierbei mit einer Öffnung in dem Maschinentisch zusammen. Es ist diese Ausdrückerplatte zwischen einer Arbeitsposition, nämlich innerhalb des Arbeitsbereichs der Presse und einer Ruheposition außerhalb des Arbeitsbereichs motorisch bewegbar, wobei der Ort der Ruheposition nach Zweckmäßigkeitsgesichtspunkten festgelegt werden kann. Der Abtransport der herausgelösten Teile kann in an sich bekannter Weise erfolgen. Die erfindungsgemäße Schneidpresse ist insbesondere bei der Behandlung sehr kleiner bzw. sehr dünner herausgeschnittener Teile von Vorteil, da diese Teile unmittelbar nach Durchführung des Schnittvorgangs entfernt werden können. Die mit dem Abtransport feiner bzw. dünner Teile verbundene Problematik stellt sich gerade im Zusammenhang mit Lasersystemen, welche sehr genaue Schnitte und damit das Herausschneiden sehr kleiner Teile aus plattenartigen Werkstücken ermöglichen. Durch die erfindungsgemäße Einrichtung wird jedoch in das Lasersystem überhaupt nicht eingegriffen, insbesondere nachdem die für den Abtransport der ausgeschnittenen Teile dienende Öffnung durch die Umrandung des bezüglich der Ebene des Maschinentisches absenkbar angeordneten Laserschachtes gebildet wird.

Gemäß den Merkmalen der Ansprüche 2 und 3 ist die Ausdrückerplatte auf ihrer Unterseite mit Verdrängungskörpern versehen. Diese Verdrängungskörper werden im Moment des Aufsetzens auf das Werkstück elastisch komprimiert, wobei durch diese elastischen Kräfte das herausgeschnittene Teil beispielsweise nach unten aus dem Werkstück herausdrückbar ist.

Die Merkmale der Ansprüche 4 und 5 bringen den Vorteil mit sich, daß die Ausdrückerplatte in ihrer Ruheposition den Arbeitsbereich, innerhalb welchem Transportvorgänge stattfinden, überhaupt nicht behindert. Dieser Arbeitsbereich bleibt somit auch für Inspektionszwecke zugänglich. Durch die erfindungsgemäße Einrichtung wird somit die Schneidpresse in ihrem üblichen Arbeitsablauf nicht beeinträchtigt.

Die Merkmale der Ansprüche 6 und 7 sind auf eine vorteilhafte Ausgestaltung des der Ausdrückerplatte zugeordneten Antriebssystems gerichtet. Dieses Antriebssystem ist derart beschaffen, daß es sowohl Absenk- als auch Drehbewegungen – jeweils zwischen definierten Grenzpunkten – ermöglicht. Die hierzu erforderlichen Hub- und Drehantriebe Können grundsätzlich beliebig ausgestaltet sein. Es muß lediglich die im wesentlichen schaltungstechnisch zu realisierende Abfolge der einzelnen Bewegungen derart beschaffen sein, daß die an der Stange exzentrisch gelagerte Ausdrückerplatte in einer solchen Position gedreht wird, in welcher diese sich seitlich neben dem Arbeitsbereich des beispielsweise C-förmigen Grundgestells der Presse befindet. Es wird hierbei aus praktischen Gründen die Stange so nah wie möglich neben dem Arbeitsbereich angeordnet sein.

Durch die schaltungstechnische Verknüpfung der Öffnung bzw. Schließung der in dem Maschinentisch vorhandenen Öffnung mit der Absenkbewegung der Ausdrückerplatte entsprechend den Merkmalen des Anspruchs 8 ist ein Beitrag zur Automatisierung des Vorgangs des Herauslösens der ausgeschnittenen Teile geleistet. Die schaltungstechnische Verknüpfung als solche kann grundsätzlich beliebig ausgebildet sein.

Durch die Merkmale der Ansprüche 9 bis 11 ist sichergestellt, daß bei der Überführung der Ausdrückerplatte ausgehend von der Ruheposition in ihre Arbeitsposition stets ein bestimmter Bewegungsablauf eingehalten wird, da während der Drehbewegung nicht gleichzeitig eine Hubbewegung stattfinden kann. Da die Steuerfunktionen aus dem jeweiligen Erreichen der Endstellungen des Drehantriebs abgeleitet werden, können die Schalteinrichtungen beispielsweise als einfache Endschalter ausgebildet sein, über welche die Arretiereinrichtung zwischen zwei Grenzzuständen gesteuert wird, nämlich einem ersten, in welchem die Vertikalbewegung der Stange blockiert ist und einem zweiten, in welchem die Vertikalbewegung der Stange freigegeben ist.

Die Erfindung wird im folgenden unter Bezugnahme auf das in den Zeichnungen dargestellte Ausführungsbeispiel näher erläutert werden. Es zeigen:

Fig. 1 eine perspektivische Ansicht einer Revolverschneidpresse mit einer Ausdrückeinrichtung;

Fig. 2 eine Seitenansicht einer Ausdrückeinrichtung;

Fig. 3 eine Ausdrückeinrichtung im teilweisen Längsschnitt;

Fig. 4 eine Ansicht der Ausdrückeinrichtung in einer Ebene IV–IV der Fig. 2;

Fig. 5 eine Ansicht des Drehantriebs in einer Ebene V–V der Fig. 3.

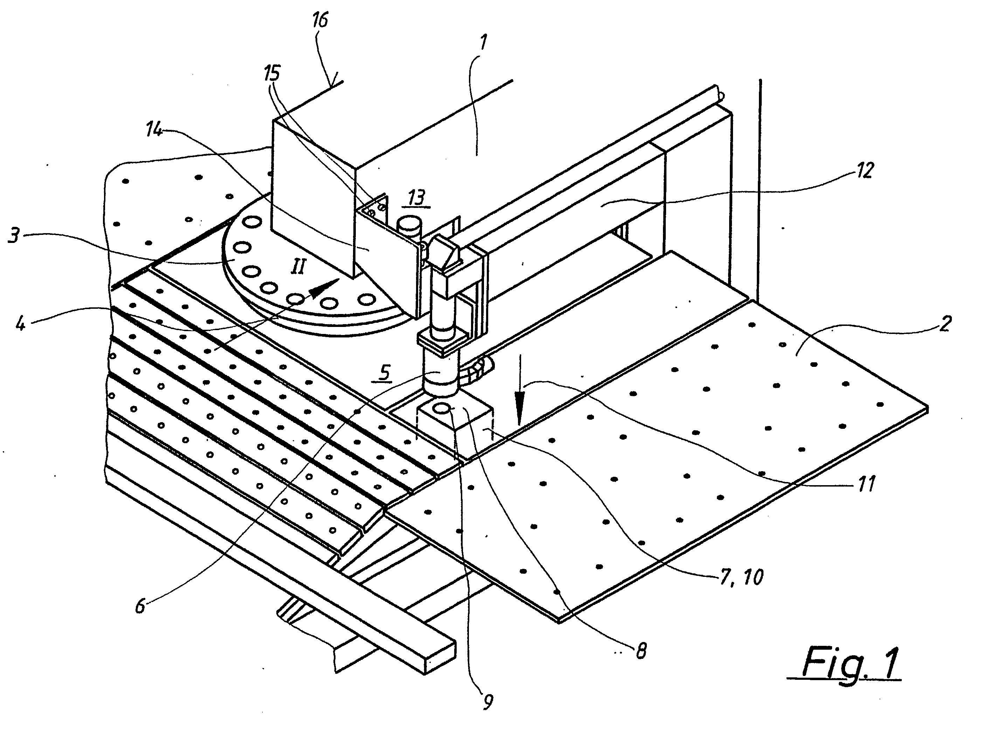

Mit 1 ist in Fig. 1 das C-förmige Grundgestell einer perspektivisch wiedergegebenen Revolverschneidpresse bezeichnet, die mit einem Koordinatentisch 2 zusammenwirkt. Das Grundgestell 1 dient in an sich bekannter Weise der Lagerung der übereinander angeordneten Revolverteller 3,4, die im Umfangsbereich zur Aufnahme einer Vielzahl von Werkzeugsätzen eingerichtet sind. Der Koordinatentisch 2 ist mit zeichnerisch nicht dargestellten Einrichtungen zur zweidimensionalen Verschiebung plattenartiger Werkstücke relativ zu der zeichnerisch ebenfalls nicht dargestellten Arbeitsstation der Presse versehen. In dieser Arbeitsstation werden bekanntlich die im oberen Revolverteller zumindest aus einem Stempel und im unteren Revolverteller zumindest aus einer Matrize bestehenden Werkzeugsätze zur Durchführung von Stanzvorgängen individuell mit einem Stößelantrieb gekuppelt.

Im vorliegenden Fall ist die Revolverschneidpresse mit einer Laserstation 5 zum Durchführen von Schneidvorgängen ausgerüstet, welche an dem zu bearbeitenden Werkstück ausgeführt werden. Die Laserstation 5 besteht im wesentlichen aus einem Laserkopf 6 und einem Laserschacht 7, welch letzterer oberseitig durch eine Platte 8 bis auf eine Öffnung 9 abgeschlossen ist. Die Oberseite der Platte 8 befindet sich in der Ebene des Koordinatenisches 2. Der aus der Platte 8 und Seitenwandungen 10 bestehende Laserschacht 7 ist an dem Koordinatentisch 2 in Richtung des Pfeiles 11 motorisch absenkbar angebracht, so daß die Oberseite der Platte 8 unter die Ebene des Koordinatentisches 2 verschiebbar ist. Die konstruktive Ausbildung der Verschiebbarkeit des Laserschachtes 7 ist zeichnerisch nicht dargestellt und kann grundsätzlich in beliebiger Weise erfolgen.

Der Laserkopf 6 nebst einigen Zubehörteilen ist seinerseits an einem Auslegerarm 12 befestigt, der sich horizontal oberhalb des Koordinatentisches 2 erstreckt und in zeichnerisch nicht näher dargestellter Weise neben dem Grundgestell der Revolverschneidpresse auf dem Fußboden angebracht ist. Die Lasereinrichtung als solche ist nicht Anmeldungsgegenstand, so daß es sich hier um ein übliches, zum Metallschneiden geeignetes Lasersystem handeln kann.

Mit 13 ist eine Ausdrückeinrichtung bezeichnet, die an einem Halteteil 14, welches als Winkelteil oder dergleichen ausgebildet ist, getragen ist. Das Halteteil 14 ist mittels Schrauben 15 an dem oberen, sich horizontal ersteckenden Schenkel 16 des C-förmigen Grundgestells der Revolverschneidpresse befestigt und erstreckt sich seitlich von diesem fort. Der genannte Auslegerarm 12 erstreckt sich parallel zu dem Schenkel 16, jedoch mit Abstand von diesem. Die seitliche Erstreckung des Halteteils 14 ist derart bemessen, daß diese bis in die Nähe der Laserstation 5 reicht.

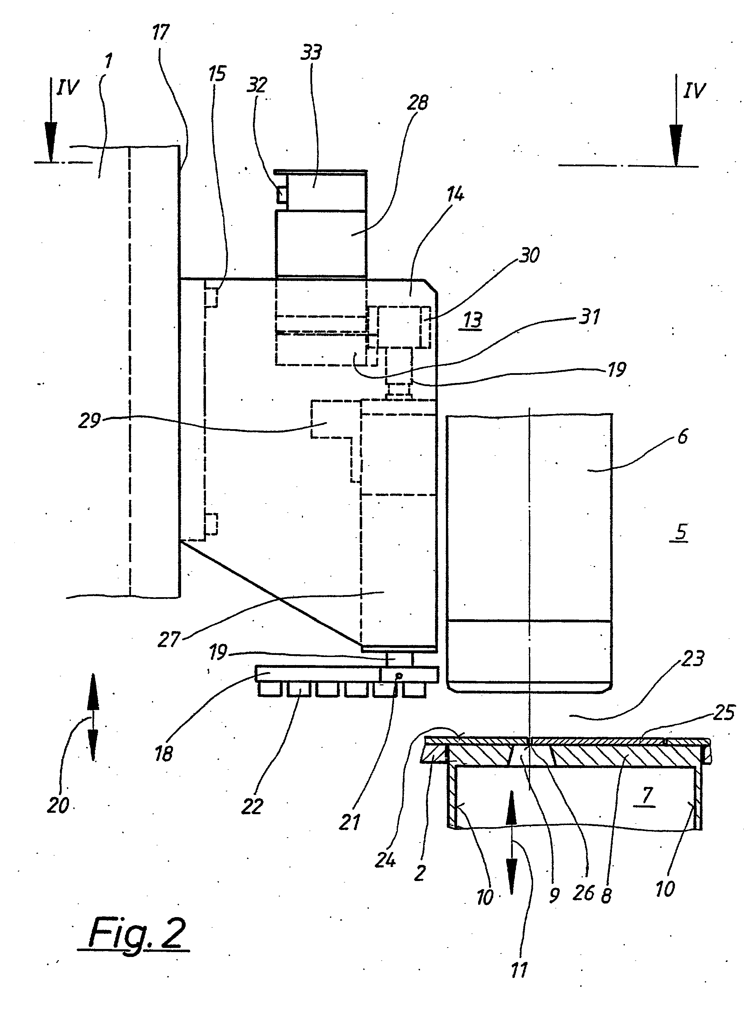

In den Fig. 2 bis 5 sind Funktionselemente, die mit denjenigen der Fig. 1 übereinstimmen, auch übereinstimmend beziffert, so daß auf eine diesbezügliche wiederholte Beschreibung verzichtet wird.

Das gemäß Fig. 2 an einer Seitenwandung 17 des Grundgestells 1 befestigte Halteteil 14 dient der Befestigung der erfindungsgemäßen Ausdrückeinrichtung 13, mittels welcher eine Ausdrückerplatte 18, die an einer Stange 19 befestigt ist, sowohl in Richtung der Pfeile 20 vertikal bewegbar als auch um die Achse der Stange 19 drehbar gehalten ist. Mit 21 ist ein Stift bezeichnet, mittels welchem die Ausdrückerplatte 18 an der Stange 19 befestigt ist.

Die Ausdrückerplatte 18 trägt an ihrer Unterseite Verdrängungskörper 22, die aus einem elastischen Werkstoff, z.B. aus Schaumkunststoff, Gummi oder dergleichen bestehen sie können jedoch auch als Drahtborsten ausgebildet sein. Die geometrische Gestalt der an der Unterseite der Ausdrückerplatte 18 angebrachten Verdrängungskörper 22 ist an sich beliebig. Auf ihre Funktion und Wirkungsweise im Rahmen des Erfindungsgegenstands wird im folgenden noch näher eingegangen werden.

Man erkennt aus der zeichnerischen Darstellung der Fig. 2, daß die Ausdrückerplatte 18 nicht rotationssymmetrisch ausgebildet bzw. angeordnet ist, so daß diese aufgrund ihrer mittels des Stiftes 21 verdrehsicheren Befestigung an der Stange 19 nach Absenkung und Schwenkung um die Achse der Stange 19 in den Zwischenraum 23 zwischen dem Laserkopf 6 und dem Laserschacht 7 geschwenkt werden kann. Die Ausdrückerplatte 18 ist hierbei derart bemessen und angeordnet, daß durch diese die Oberseite des Laserschachtes 7, insbesondere die Platte 8 im wesentlichen überdeckt werden kann.

Mit 24 ist ein Werkstück, nämlich ein Blech bzw. eine Platine bezeichnet, aus welchem in der Laserstation 5 ein durch einen Schnitt 26 umrandetes Teil 25 herausgeschnitten worden ist. Auf die Art der Entfernung dieses Teils 25 wird im folgenden noch näher eingegangen werden.

Die Betätigung der Ausdrückerplatte 18 bzw. der Stange 19 erfolgt über ein Druckmedium, im vorliegenden Fall pneumatisch. Hierzu sind für die vertikale Hubbewegung ein Hubzylinder 27, für die Drehbewegung um die Achse der Stange 19 eine Drehzylinder 28 und für die Arretierung der Stange 19 hinsichtlich einer Bewegung in vertikaler Richtung ein Arretierzylinder 29 vorgesehen. Der Hubzylinder 27 und der Drehzylinder 28 sind in zeichnerisch nicht näher dargestellter Weise an dem Halteteil 14 befestigt, wohingegen der Arretierzylinder 29 an dem Hubzylinder 27 befestigt ist. Die Stange 19 durchdringt den gesamten Hubzylinder 27 und trägt an ihrem, der Ausdrückerplatte 18 abgekehrten Ende ein Ritzel 30, welches mit einem Zahnsegment 31 im Eingriff steht, das seinerseits auf der Abtriebswelle des Drehzylinders 28 angebracht ist. Das Ritzel 30 ist hinsichtlich seiner axialen Erstreckung in Abstimmung mit dem maximal möglichen Hub der Stange 19 derart bemessen, daß in jeder axialen Position ein zuverlässiger Eingriff mit dem Zahnsegment 31 stattfindet.

Mit 32 ist ein Anschlagarm und mit 33 ein Abdeckblech bezeichnet. Auf die genaue Lagerung und Funktion des auf der Welle des Drehzylinders 28 angeordneten Anschlagarms 32 wird im folgenden noch näher eingegangen werden.

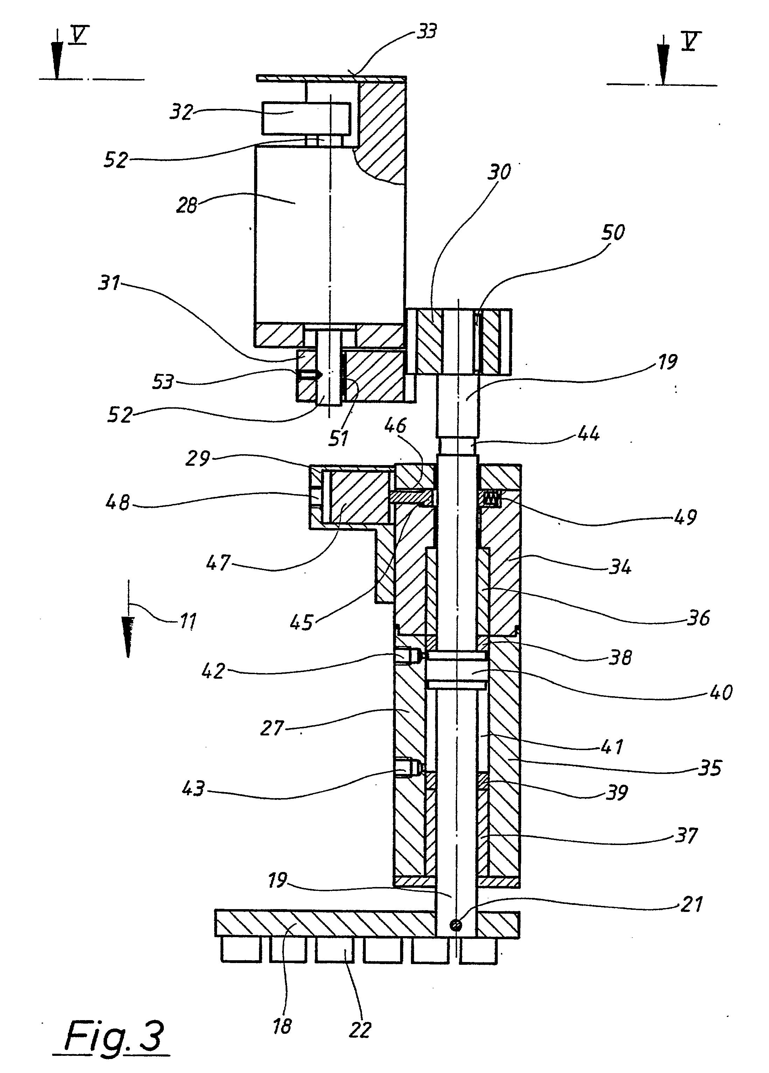

Gemäß Fig. 3 ist der Hubzylinder 27 im wesentlichen aus zwei Zylinderkörpern 34, 35 zusammengesetzt, innerhalb welchen durch eingesetzte Buchsen 36, 37 in Verbindung mit Anschlagringen 38, 39 der Vertikalhub eines auf der Stange 19 angeordneten Kolbens 40 konstruktiv festgelegt ist. An den jeweiligen Endbereichen des auf diese Weise definierbaren Hubraumes 41 befinden sich Anschlußbohrungen 42, 43 für ein Druckmedium, hier Druckluft. Die Stange 19 ist in ihrem oberen Bereich mit einer umlaufenden Nut 44 ausgerüstet, welche mit einem Arretierglied 45 zusammenwirkt.

Das Arretierglied 45 ist in einer sich senkrecht zur Achse der Stange 19 erstreckenden Ausnehmung 46 des Zylinderkörpers 34 gleitend aufgenommen und bildet mit der Kolbenstange des Kolbens 47 des Arretierzylinders 29 ein konstruktive Einheit. Mit 48 ist eine Anschlußbohrung des Arretiersylinders 29 bezeichnet, welche der Zuführung eines Druckmediums, hier Druckluft dient. Das Arretierglied 46 wirkt gleichzeitig mit einer Rückstellfeder 49 zusammen, die in einer entsprechenden Ausnehmung des Zylinderkörpers 34 gelagert ist und auf das Arretierglied 45 dahingehend einwirkt, daß dieses im drucklosen Zusand des Arretierzylinders 29 gegen die Stange 19 gedrückt wird und auf diese Weise mit der Nut in Eingriff bringbar ist. Es kann somit im drucklosen Zustand des Arretierzylinders 29 die Vertikalbewegung der Stange 19 durch das Arretierglied 45 blockiert werden.

Mit 50 ist eine Paßfeder bezeichnet, durch welche eine verdrehsichere Befestigung des Ritzels 30 auf der Stange 19 sichergestellt ist.

Mit 51 ist eine weitere Paßfeder bezeichnet, durch welche eine drehsichere Befestigung des Zahnsegments 31 auf der Welle 52 des Drehzylinders 28 sichergestellt ist. Die Befestigung des Zahnsegementes 31 auf der Welle 52 erfolgt darüber hinaus mittels eines Gewindestiftes 53. Als Drehzylinder 28 kann eine an sich handelsübliches Funktionselement Verwendung finden, welches mit entsprechenden Druckmittelanschlüssen für Vorwärts- und Rückwärtslauf versehen ist. Es wird deshalb auf eine nähere Beschreibung dieses Bauteils verzichtet.

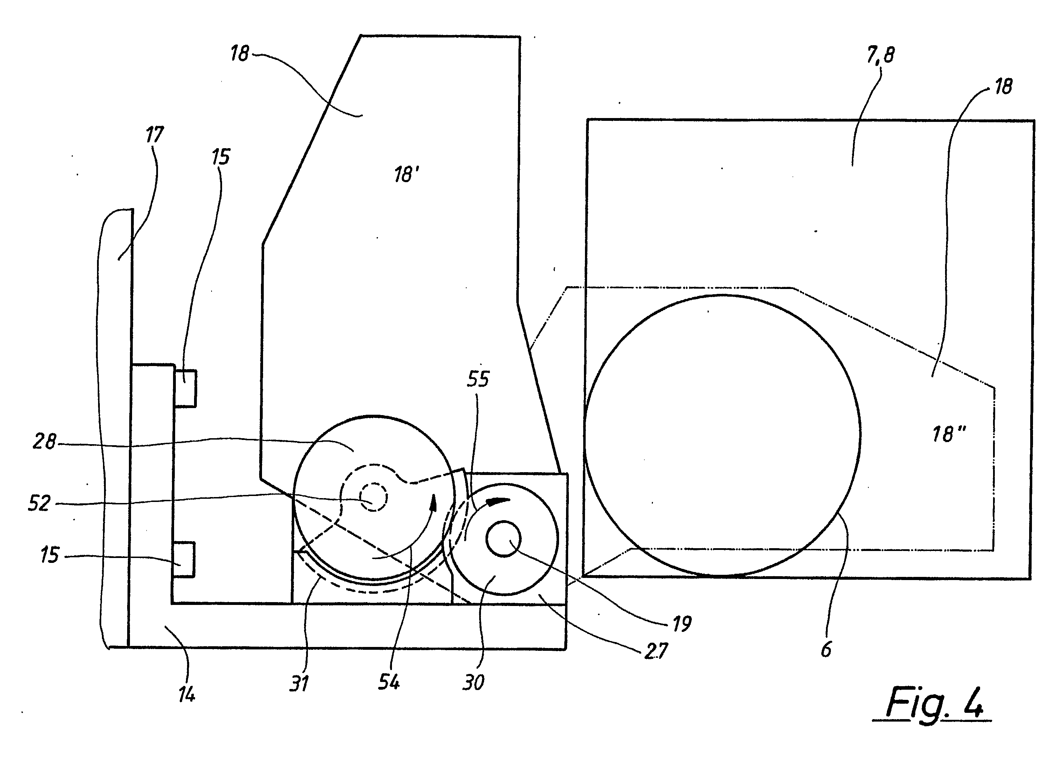

Fig. 4 läßt in der Draufsicht erkennen, wie über eine Drehung der Welle 52 des Drehzylinders 28 in Richtung des Pfeiles 54 mittels des Zahnsegmentes 31 das Ritzel 30 und damit die Ausdrückerplatte 18 ausgehend von einer Position 18′ in eine Possition 18″ überführt wird, somit um einen Winkel von ungefähr 90° in einer Horizontalebene gedreht wird. Zeichnerisch nicht dargestellt sind elektrische bzw. elektronische Schalteinrichtungen, durch die das Ende der Drehbewegung der Welle 52 des Drehzylinders 28 festgestellt wird.

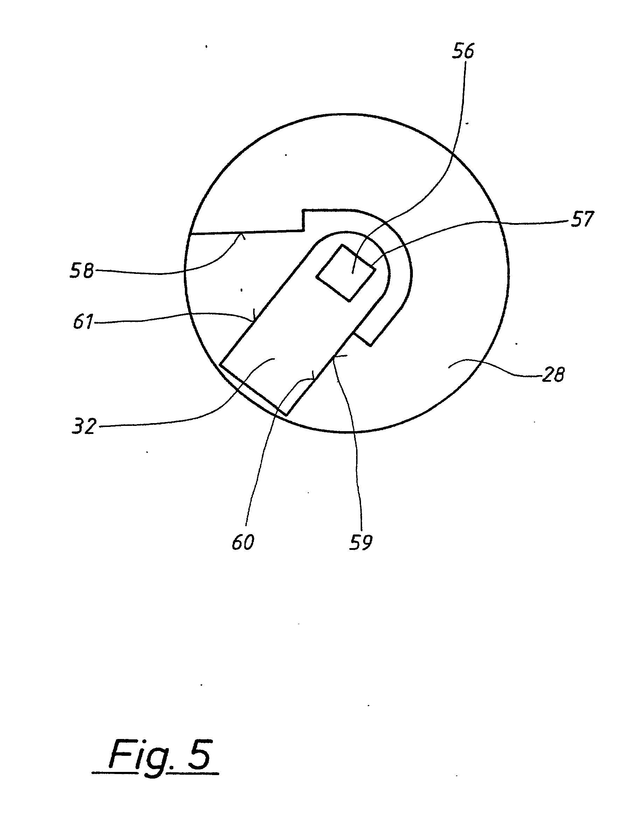

Gemäß Fig. 5 endet das aus der Oberseite des Hubzylinders 28 herausragende Ende der Welle 52 in einem Vierkantprofil 56, welches in eine entsprechende vierkantige Ausnehmung 57 des Anschlagarms 32 eingesetzt ist. Das Gehäuse des Drehzylinders 28 bildet im Bereich des Anschlagarmes 32 Anschlagflächen 58, 59, deren jeweilige Ebenen sich unter einem Winkel zueinander erstrecken, durch welchen der Drehwinkel der Welle 52 des Drehzylinders 28 konstruktiv festgelegt ist. Der im wesentlichen quaderförmig ausgebildete Anschlagarm weist seinerseits Grenzflächen 60, 61 auf, die sich symmetrisch und parallel zu einer, durch den Drehpunkt des Anschlagarms 32 verlaufenden Ebene erstrecken. Die genannten Anschlagflächen 58, 59 sind ebenfalls derart angeordnet, daß im Berührungszustand sich die jeweiligen Grenzflächen parallel zu diesen Anschlagflächen erstrecken. In Fig. 5 ist die Arbeitsstellung der erfindungsgemäßen Ausdrückeinrichtung 13 gezeigt, bei welcher sich die Ausdrückerplatte 18 in dem Zwischenraum 23 befindet, wobei die Grenzfläche 60 an der Anschlagfläche 59 anliegt.

Im folgenden soll kurz die Wirkungsweise der erfindungsgemäßen Ausdrückeinrichtung 13 beschrieben werden, und zwar insbesondere unter Bezugnahme auf die Fig. 2 und 3:

Es wird davon ausgegangen, daß der Schnitt 26 innerhalb des Werkstücks 24 vollzogen ist, so daß das Teil 25 rundum freigeschnitten ist. In dieser Phase befindet sich der Laserschacht 7 in seiner oberen Stellung, in welcher dessen Oberseite, nämlich die Platte 8 in der Ebene des Koordinatentisches 2 liegt. Außerdem befindet sich in dieser Phase die Ausdrückeinrichtung in ihrer angehobenen Ruhestellung, welche in Fig. 2 wiedergegeben ist. Diese Ruhestellung ist dadurch charakterisiert, daß die Ausdrückerplatte 18 nicht nur angehoben ist, sondern auch aus dem Arbeitsbereich der Laserstation 5 durch Drehung um die Achse der Stange 19 herausgeschwenkt ist. In dieser Ruhestellung befindet sich außerdem die Nut 44 oberhalb der Lage des Arretiergliedes 45, wobei gleichzeitig der Arretierzylinder 29 drucklos ist. Eine Drehbewegung der Stange 19 ist in der Ruhestellung mittels des Ritzels 30 blockiert, welches mit dem Zahnsegment 31 im Eingriff steht, dessen Drehung wiederum mittels des Drehzylinders 28 auf pneumatischem Wege blockiert ist. Es kann darüber hinaus der Kolben 40 in dieser angehobenen Lage auf pneumatischem Wege, beispielsweise durch Druckbeaufschlagung der Anschlußbohrung 43 gehalten werden.

In dieser Phase wird der Ausdrückvorgang dadurch eingeleitet, daß zunächst die Anschlußbohrung 42 mit einem höhreren Druck als die Anschlußbohrung 43 beaufschlagt wird, so daß der Kolben 40 sowie die Stange 19 mit der an dieser befestigten Ausdrückerplatte 18 nach unten in Richtung des Pfeiles 11 bewegt werden. Das Arretierglied 45 rastet unter der Wirkung der Rückstellfeder 49 in die Nut 44 ein, sobald die Höhenlage der Ausnehmung 46 erreicht ist. Es ist nunmehr die weitere Abwärtsbewegung zunächst blockiert.

Die Anordnung der Ausdrückeinrichtung 13 relativ zu dem Zwischenraum 23 ist in Verbindung mit der Lage der Nut 44 derart bemessen, daß in diesem eingerasteten Zustand des Arretiergliedes 46 nunmehr mittels des Drehzylinders 28 eine Drehbewegung auf die Stange 19 übertragen wird, so daß die Ausdrückerplatte 18 in den Zwischenraum 23 zwischen dem Laserkopf 6 und dem Laserschacht 7 eingeschwenkt wird. Es kann diese Schwenkbewegung auf Elektrischem, pneumatischem oder mechanischem Wege automatisch mit dem Einrasten des Arretiergliedes 46 verknüpft sein.

Auf eine Darstellung der hierzu erforderlichen Schaltglieder wird jedoch aus Gründen der zeichnerischen Übersichtlichkeit verzichtet.

Das Ende der Drehbewegung der Stange 19 und damit der Ausdrückerplatte 18 wird ebenfalls durch geeignete elektrische, elektronische oder sonstige Schaltelemente festgestellt, wobei in Abhängigkeit von deren Schaltzustand nunmehr der Arretierzylinder 29 über die Anschluß bohrung 48 mit Druck beaufschlagt wird, so daß entgegen der Wirkung der Rückstellfeder 49 die bisher gegebene Arretierung gelöst wird. Unter der Wirkung des über die Anschlußbohrung 42 auf den Hubzylinder 27 übertragenen Druckes findet nunmehr eine weitere Abwärtssenkung der Ausdrückerplatte 18 statt, wobei nunmehr die Verdrängungskörper 22 auf dem Werkstück aufliegen und hierbei elastisch zusammengedrückt werden. Sobald der Kolben 40 seine unterste Lage erreicht hat, findet eine automatische Absenkung des Laserschachtes 7 statt, so daß aufgrund der elastischen Kräfte der Verdrängungskörper 22 nunmehr das Teil 25 aus dem Werkstück 24 herausgedrückt und in an sich beliebiger Weise aus dem Arbeitsbereich der Schneidpresse abtransportiert wird. Auf die Darstellung der hierzu notwendigen Transportmechanismen ist jedoch ebenfalls verzichtet worden. Der motorisch durchgeführte Vorgang des Absenkens des Laserschachtes 7 kann ebenfalls elektrisch, elektronisch oder in sonstiger Weise mit dem Erreichen der untersten Lage des Kolbens 40 verknüpft sein.

Der vertikale Hubweg des Laserschachtes entspricht hierbei mindestens der maximal zulässigen Dicke des Werkstücks 24.

Nachdem das herausgeschnittene Teil 25 abtransportiert ist und der Laserschacht seine unterste Lage erreicht hat, ist das Ende des Ausdrückvorganges erreicht, woraufhin nunmehr die Anschlußbohrung 43 mit Druck beaufschlagt wird, so daß der Kolben 40 sich aufwärts in Gegenrichtung des Pfeiles 11 bewegt. In dieser ersten Bewegungsphase wird der Arretierzylinder 29 drucklos geschaltet, so daß mit Erreichen der Nutt 44 das Arretierglied 45 einrasten kann. Aus dieser Einrastbewegung wird ein Steuersignal für den Drehzylinder 28 abgeleitet, durch welchen nunmehr die Ausdrückerplatte 18 aus dem Zwischenraum 23, nämlich dem Arbeitsbereich der Laserstation 5 herausgeschwenkt wird. Aus dem Ende dieser Drehbewegung wird wiederum ein Steuersignal abgeleitet, woraufhin durch Druckbeaufschlagung des Arretierzylinders 29 die Arretierung gelöst und anschließend die weitere Aufwärtsbewegung der Ausdrückerplatte 18 bis in die in Fig. 2 gezeigte Ruhestellung fortesetzt wird. In dieser oberen Ruhestellung wird anschließend der Arretierzylinder 29 drucklos geschaltet.

Man erkennt aus der vorangegangenen Darstellung, daß die Ausdrückeinrichtung einen konstruktiv einfachen Aufbau aufweist und daß zum Ausdrücken eines ausgeschnittenen Teils eines Werkstücks letzteres nicht bewegt werden muß, so daß sich der Ausdrückvorgang unmittelbar an den Schneidvorgang anschließen kann.

**Patentansprüche**

1. Schneidpresse zum Bearbeiten plattenartiger Werkstücke (24) mit zumindest einer, als Laserstation (5) ausgestalteten Arbeitsstation, die zum Ausschneiden von Teilen (25) des Werkstücks (24) eingerichtet ist, mit einer Einrichtung (13) zum Herauslösen der ausgeschnittenen Teile (25) aus der Ebene des Werkstücks (24) heraus zwecks Entfernung derselben aus dem Arbeitsbereich der Presse, in welchem deren Werkzeug wirksam ist, wobei die genannte Einrichtung eine Ausdrückerplatte (18) aufweist, die zum Verdrängen der Teile (25) aus der Ebene des Werkstücks (24) ausgestaltet ist, wobei die Ausdrückerplatte (18) an einer, sich senkrecht zu deren Ebene erstreckenden, senkrecht bewegbaren Stange (19) befestigt ist und wobei in dem Maschinentisch bzw. der Unterlage für das Werkstück (24) eine Öffnung zum Abführen des/der Teiles/Teile (25) vorgesehen ist, dadurch gekennzeichnet, daß die Ausdrückerplatte (18) zwecks Verdrängens der Teile (25) in den genannten Arbeitsbereich motorisch überführbar ist, daß die Ausdrückerplatte (18) exzentrisch an der sich im wesentlichen senkrecht erstreckenden Stange (19) befestigt ist, daß die Stange (19) um ihre Achse drehbar an dem Grundgestell (1) der Presse gehalten ist, daß die Ausdrückerplatte (12) in den Zwischenraum (23) zwischen einem Laserkopf (6) und einem Laserschacht (7) einbringbar ist, daß die genannte Öffnung in dem Maschinentisch bzw. der Auflage für das Werkstück (24) durch die Umrandung der oberen, sich in der Ebene des Maschinentisches bzw. der Auflage für das Werkstück (24) erstreckenden Abschlußfläche des Laserschachtes (7) gebildet wird und daß der Laserschacht (7) zwecks Freigabe der Öffnung motorisch absenkbar gehalten ist.

2. Schneidpresse nach Anspruch 1, dadurch gekennzeichnet, daß die Ausdrückerplatte (18) auf ihrer zum Verdrängen der Teile (25) eingerichteten Seite mit Verdrängungskörpern (22) ausgerüstet ist und daß die Verdrängungskörper (22) aus einem elastischen Werkstoff bestehen.

3. Schneidpresse nach Anspruch 2, dadurch gekennzeichnet, daß die Verdrängungskörper (22) aus Schaumkunststoff oder einem gummiartigen Werkstoff bestehen oder als Drahtbürsten ausgebildet sind.

4. Schneidpresse nach einem der vorangegangenen Ansprüche 1 bis 3, dadurch gekennzeichnet, daß die Ausdrückerplatte (18) zwischen einer Arbeitsposition oberhalb der Teile (25) innerhalb des Arbeitsbereiches und einer Ruheposition außerhalb des Arbeitsbereiches motorisch verfahrbar ist.

5. Schneidpresse nach Anspruch 4, dadurch gekennzeichnet, daß sich die Ruheposition der Ausdrückerplatte (18) seitlich und oberhalb des Arbeitsbereiches, insbesondere oberhalb der Ebene des Werkstücks (24) befindet.

6. Schneidpresse nach einem der vorangegangenen Ansprüche 1 bis 5, dadurch gekennzeichnet, daß die Stange (19) mit einem vertikal wirkenden Hubantrieb und mit einem, eine Drehbewegung um ihre eigene Achse bewirkenden Drehantrieb in Wirkverbindung steht.

7. Schneidpresse nach einem der vorangegangenen Ansprüche 1 bis 6, dadurch gekennzeichnet, daß die Stange (19) den Kolben (40) eines am Grundgestell (1) der Presse befestigten Hubzylinders (27) trägt, daß die Stange (19) mit einem zur Einleitung einer Drehbewegung um ihre eigene Achse geeigneten, am Grundgestell (1) der Presse befestigten Drehzylinder (28) in Wirkverbindung steht und daß sowohl der Hub- (27) als auch der Drehzylinder (28) als in ihrer Antriebsrichtung umkehrbare Antriebskomponenten ausgestaltet sind.

8. Schneidpresse nach einem der vorangegangenen Ansprüche 1 bis 7, dadurch gekennzeichnet, daß die Öffnung des Maschinentisches bzw. der Auflage des Werkstücks (24) motorisch schließbar ist bzw. geöffnet werden kann und daß die Betätigung dieser Öffnung mechanisch, elektrisch, pneumatisch oder hydraulisch mit der Absenkbewegung der Ausdrückerplatte (18) in Richtung auf das zu verdrängende Teil (25) hin verknüpft ist.

9. Schneidpresse nach einem der vorangegangenen Ansprüche 6 bis 8, dadurch gekennzeichnet, daß eine Arretiereinrichtung vorgesehen ist, durch welche die Stange (19) in einer festgelegten Vertikalposition arretierbar ist und daß die Arretiereinrichtung schaltungstechnisch derart mit dem Drehantrieb verknüpft ist, daß die Einleitung einer Drehbewegung mittels diesem nur in dieser Vertikalposition möglich ist.

10. Schneidpresse nach einem der vorangegangenen Ansprüche 6 bis 9, dadurch gekennzeichnet, daß die Drehbewegung des Drehantriebs drehwinkelbegrenzt ist, daß der Drehantrieb an den jeweiligen Endpositionen mit Schaltungselementen versehen ist, die mit Schalteinrichtungen zusammenwirken, die ihrerseits mit der Arretiereinrichtung in Wirkverbindung stehen und daß die Schaltelemente als Anschlagarme (32) ausgestaltet sind, die auf der Welle (52) des Drehantriebs angeordnet sind.

11. Schneidpresse nach einem der vorangegangenen Ansprüche 9 oder 10, dadurch gekennzeichnet, daß die Arretiereinrichtung als Kolben-Zylinder-Einheit ausgestaltet ist, die mit einer umlaufenden Nut (44) der Stange (19) zusammenwirkt.

12. Schneidpresse nach einem der vorangegangenen Ansprüche 6 bis 11, dadurch gekennzeichnet, daß der Drehantrieb über ein Zahnsegment (31) mit einem auf der Stange (19) angeordneten Ritzel (30) in Verbindung steht.

13. Schneidpresse nach einem der vorangegangenen Ansprüche 1 bis 12, dadurch gekennzeichnet, daß die Einrichtung (13) einschließlich zugehöriger Antriebskomponenten seitlich neben der Arbeitsstation angeordnet ist.

14. Schneidpresse nach einem der vorangegangenen Ansprüche 1 bis 13, dadurch gekennzeichnet, daß die Einrichtung (13) derart ausgebildet bzw. angeordnet ist, daß die Drehbewegung der Ausdrückerplatte (18) in einer Ebene erfolgt, die sich durch den Zwischenraum (23) hindurcherstreckt.

**Revendications**

1. Presse à découper pour le traitement de pièces en forme de plaque (24) comportant au moins un poste de travail constitué d'un poste laser (5) qui est équipé pour la découpe de parties (25) de la pièce à traiter (24), comportant un équipement (13) pour enlever hors du plan de la pièce à traiter (24) les parties découpées (25) pour les éloigner de la zone de travail de la presse dans laquelle l'outil de celle-ci est actif, cet équipement présentant une plaque d'éjection (18), de forme appropriée pour éloigner les parties (25) du plan de la pièce à traiter (24), la plaque d'éjection (13) étant fixée à une tige (19) mobile verticalement, s'étendant perpendiculairement au plan de cette dernière, et un orifice destiné à emmener la ou les pièces (25) étant prévu dans la table de machine ou le support de la pièce à traiter (24), caractérisée en ce que la plaque d'éjection (18) destinée à déplacer les pièces (25) dans la zone de travail citée est mobile en translation par moteur, en ce que la plaque d'éjection (18) est fixée de façon excentrique sur la tige (19) qui s'étend sensiblement verticalement, en ce que la tige (19) est montée, à rotation autour de son axe, sur le bâti (1) de la presse, en ce que la plaque d'éjection (18) peut être amenée dans l'espace intermédiaire (23) entre une tête laser (6) et un puits laser (7), en ce que l'orifice mentionné ci-dessus dans la table de machine ou le support de la pièce à traiter est constitué par la bordure de la surface intérieure d'extrémité du puits laser (7), s'étendant dans le plan de la table de machine ou du support de pièce à traiter, et en ce que le puits laser (7) est monté de façon à pouvoir être abaissé par moteur pour libérer l'orifice.

2. Presse à découper selon la revendication 1, caractérisée en ce que la plaque d'éjection (18) est munie, sur son côté équipé pour le déplacement des pièces (25), de corps de déplacement (22) et en ce que les corps de déplacement (22) sont en un matériau élastique.

3. Presse à découper selon la revendication 2, caractérisée en ce que les corps de déplacement (22) sont en une matière plastique spongieuse ou en un matériau caoutchouteux ou sont constitués de brasses métalliques.

4. Presse à découper selon l'une des précédentes revendications 1 à 3, caractérisée en ce que la plaque d'éjection (18) peut être déplacée par moteur entre une position de travail au-dessus des pièces (25) à l'intérieur de la zone de travail et une position de repos en dehors de la zone de travail.

5. Presse à découper selon la revendication 4, caractérisée en ce que la position de repos de la plaque d'éjection (18) se trouve sur le côté et au-dessus de la zone de travail, en particulier au-dessus du plan de la pièce à traiter (24).

6. Presse à découper selon l'une des précédentes revendications 1 à 5, caractérisée en ce que la tige (19) est en liaison active avec un entraînement de levage agissant verticalement et avec un entraînement en rotation lui communiquant un mouvement de rotation autour de son propre axe.

7. Presse à découper selon l'une des précédentes revendications 1 à 6, caractérisée en ce que la tige (19) porte le piston (40) d'un vérin de levage (27) fixé sur le bâti (1) de la presse, en ce que la tige (19) est en liaison active avec un vérin de rotation (28), fixé sur le bâti (1) de la presse, approprié à lui communiquer un mouvement de rotation autour de son propre axe, et en ce qu'aussi bien le vérin de levage (27) que le vérin de rotation (28) sont constitués comme composants dont le sens d'entraînement est réversible.

8. Presse à découper selon l'une des précédentes revendications 1 à 7, caractérisée en ce que l'orifice de la table de machine ou du support de la pièce à traiter (24) peut être fermé et ouvert par moteur et en ce que l'actionnement de cet orifice est relié mécaniquement, électriquement, pneumatiquement ou hydrauliquement au déplacement d'abaissement de la plaque d'éjection (18) en direction de la pièce à déplacer (25).

9. Presse à découper selon l'une des précédentes revendications 6 à 8, caractérisée en ce qu'il existe un dispositif de blocage par lequel la tige (19) peut être bloquée dans une position verticale fixe et en ce que le dispositif de blocage est relié par technique de commutation à l'entraînement en rotation de telle façon que celui-ci ne puisse communiquer un mouvement de rotation que dans cette position verticale.

10. Presse à découper selon l'une des précédentes revendications 6 à 9, caractérisée en ce que le déplacement de rotation de l'entraînement en rotation est limité en angle de rotation, en ce que le déplacement en rotation comporte, à ses positions finales respectives, des éléments de commutation, qui coopèrent avec des dispositifs de commutation qui sont eux-mêmes en liaison active avec le dispositif de blocage, et en ce que les éléments de commutation présentent la forme de bras de butée (32), qui sont disposés sur l'arbre (52) de l'entraînement en rotation.

11. Presse à découper selon l'une des précédentes revendications 9 ou 10, caractérisée en ce que le dispositif de blocage est constitué comme un vérin qui coopère avec une encoche périphérique (44) de la tige (19).

12. Presse à découper selon l'une des précédentes revendications 6 à 11, caractérisée en ce que l'entraînement en rotation est en liaison par un segment denté (31) avec un pignon (30) disposé sur la tige (19).

13. Presse à découper selon l'une des précédentes revendications 1 à 12, caractérisée en ce que le dispositif (13), y compris les composants d'entraînement qui lui appartiennent, est situé latéralement, à côté du poste de travail.

14. Presse à découper selon l'une des précédentes revendications 1 à 13, caractérisée en ce que le dispositif (13) est constitué et disposé de telle façon que le déplacement de rotation de la plaque d'éjection (18) s'effectue dans un plan qui s'étend à travers l'espace intermédiaire (23).

**Claims**

1. Cutting press for the treatment of plate-like workpieces (24), comprising at least one work station equipped as a laser station (5) which is arranged for the cutting out of parts (25) of the workpiece (24), a device (13) for freeing the cutout part (25) from the plane of the workpiece (24) for removing the cutout part from the working zone of the press in which its tool is effective, wherein the said device comprises a pressure plate (18) which is arranged to displace the part (25) from the plane of the workpiece (24), wherein the pressure plate (18) is secured to a vertically movable rod (19) which extends perpendicular to the said plane, and wherein an aperture is provided in the machine table or in the support for the workpiece (24) to permit the removal of the part or parts (25), characterised in that the pressure plate (18) is guided in a motorised manner in the said working zone for the purpose of displacing the parts (25), the pressure plate (18) is secured eccentrically on the substantially vertically extending rod (19), the rod (19) is mounted on the framework (1) of the press for rotation about the rod axis, the pressure plate (18) can be brought into the intermediate space (23) between a laser head (6) and a laser body (7), the said aperture in the machine table or in the support for the workpiece (24) periphally surrounds the edge of the upper closure surface of the laser body (7) which extends in the plane of the machine table or of the support for the workpiece (24), and the laser body (7) can be lowered in a motorised manner for freeing the aperture.

2. Cutting press according to claim 1, characterised in that the pressure plate (18) is provided with displacement bodies (22) on its side which is arranged to displace the parts (25), and in which the displacement bodies (22) are of a resilient material.

3. Cutting press according to claim 2, characterised in that the displacement bodies (22) are formed of foam plastics material or a rubber-like material or are formed as wire bristles.

4. Cutting press according to one of the preceding claims 1 to 3, characterised in that the pressure plate (18) is displaceable in motorised manner between a working position above the parts (25) within the working zone and a rest position which is outside the working zone.

5. Cutting press according to claim 4, characterised in that the rest position of the pressure plate (18) is located to the side of and above the working zone, and in particular above the plane of the workpiece (24).

6. Cutting press according to one of the preceding claims 1 to 5, characterised in that the rod (19) is in operative connection with a vertically acting lifting drive and with a rotary drive which effects a rotational movement about its own axis.

7. Cutting press according to one of the preceding claims 1 to 6, characterised in that the rod (19) bears the piston (40) of a lifting cylinder (27) which is secured to the framework (1) of the press, the rod (19) is in operative connection with a rotary cylinder (28) which is secure to the framework (1) of the press and which is arranged to effect a rotational movement about its own axis, and both the lifting cylinder (27) and also the rotary cylinder (28) are formed as driving components which are reversible as to their direction of driving.

8. Cutting press according to one of the preceding claims 1 to 7, characterised in that the aperture in the machine table or in the support for the workpiece (24) can be closed and opened in a motorised manner, and the control over this aperture is effected mechanically, electrically, pneumatically or hydraulically, linked with the lowering movement of the pressure plate (18) in the direction towards the part (25) which is to be displaced.

9. Cutting press according to one of the preceding claims 6 to 8, characterised in that an arresting device is provided by which the rod (19) can be stopped in a determined vertical position, and the arresting device is linked by switch means with the rotary drive in such a manner that a rotational movement by means of this drive can be performed only in this vertical position.

10. Cutting press according to one of the preceding claims 6 to 9, characterised in that the rotational movement of the rotary drive is angularly limited, the rotary drive is provided at each end position with switch elements which cooperate with switching devices which for their part are in operative connection with the arresting device, and the switch elements comprise abutment arms (32) which are arranged on the shaft (52) of the rotary drive.

11. Cutting press according to one of the preceding claims 9 or 10, characterised in that the arresting device comprises a piston-cylinder unit which cooperates with a peripheral groove (44) in the rod (19).

12. Cutting press according to one of the preceding claims 6 to 11, characterised in that the rotary drive is connected by means of a toothed segment (31) to a pinion (30) arranged on the rod (19).

13. Cutting press according to one of the preceding claims 1 to 12, characterised in that the device (13) inclusive of associated drive components is arranged adjacent to and to one side of the work station.

14. Cutting press according to one of the preceding claims 1 to 13, characterised in that the device (13) is formed and arranged in such a manner that the rotational movement of the pressure plate (18) is effected in a plane which passes through the intermediate space (23).

_Fig. 1_

_Fig.2_

_Fig.3_

_Fig. 4_

_Fig. 5_